# EUROPEAN PATENT SPECIFICATION

(11) **EP 1 638 257 B1**
(45) Date of publication and mention of the grant of the patent: **30.07.2008**
(21) Application number: 05011362.0
(22) Date of filing: 25.05.2005
(51) Int. Cl.: H04L 12/28

(54) **Configurable entertainment network**
Konfigurierbares Unterhaltungsnetz
Réseau configurable de divertissement

(30) Priority: 17.09.2004 US 944508
(43) Date of publication of application: 22.03.2006
(73) Proprietor: Broadcom Corporation, Irvine, CA 92617 (US)
(72) Inventor: Rael, Jacob, Albuquerque, NM 87110 (US); Rael, Henry, Albuquerque, NM 87110 (US)
(74) Representative: Jehle, Volker Armin

(56) References cited:
- EP-A- 1 408 653
- US-A1- 2004 125 779
- US-B1- 6 480 505
- US-B1- 6 618 361

## Description

### BACKGROUND OF THE INVENTION

### TECHNICAL FIELD OF THE INVENTION

This invention relates generally to entertainment systems and more particularly to network-based configurability of such entertainment systems.

### DESCRIPTION OF RELATED ART

As is known, entertainment systems have evolved from a television set and a radio to complex systems that include expensive video equipment, computers, satellite receivers, cable receivers, broadcast receivers, expansive audio equipment, video game equipment, DVD players, CD players, etc. Such complex entertainment systems offer its users tremendous variety in home entertainment and movie theater quality.

As is also known, providing the electrical coupling between the components of an entertainment system is done through direct connect wiring. For example, a receiver is typically direct wire coupled to a DVD player, a VCR, a cable set top box, speakers, and a video monitor. Such direct wire coupling includes a significant number of wires that most users desire to hide either in the wall or behind the furniture supporting the equipment.

Typically, once an entertainment system is set-up via direct wire coupling, adding or removing components from the system is a rather involved task. For instance, assume that the user desires to add a satellite receiver to the above mentioned system. In this instance, the user would direct wire couple the satellite receiver to the system receiver, which may or may not have inputs to accommodate the satellite receiver and will require a physical manipulation of the existing direct wire coupling. Once the satellite receiver is wired in, the even larger number of wires would again need to be hidden in the wall and/or behind the furniture. Similar issues arise when a component is removed from the system.

Further, as the entertainment system is being set-up, decisions are made as to which inputs and outputs of the equipment to use. For instance, a system receiver may include composite, S-video, RGB (Red, Green, Blue for computer-type monitors), and/or YCrCb (progressive scan video) video inputs and outputs. Once the decision as to which inputs and outputs to use have been implemented, it is requires a re-wiring of the system to change.

In an effort to reduce the number of wires in an entertainment system, wireless speakers have been created. Such wireless speakers include a radio frequency (RF) receiver (typically in the 900 MHz band) that receives RF signals from the system receiver, which includes an RF transmitter. In general, the transmitter of the system receiver modulates the audio signals that are destined for the speakers on an RF carrier to produce the RF signals. The RF receiver of the speakers receives the RF signals and demodulates them to recapture the original audio signals.

While wireless speakers reduce the number of direct wire connections in an entertainment system, such systems are still primarily direct wire coupled. As such, changes to the system require a relatively significant effort.

Therefore, a need exists for a user-friendly method and apparatus of configuring and/or reconfiguring an entertainment system.

US 2004/0125779 describes a method for allocating channels in a wireless local area network (LAN) among a plurality of clients. At least one client of the plurality of clients is assigned to a channel of a set of active channels. Next, for each client the access time is determined based on an access time factor.

According to the invention, there are provided a method for configuring an entertainment network as defined by independent claim 1 and an entertainment network as defined by independent claim 6.

Further advantageous features of the invention are defined in the dependent subclaims.

The configurable entertainment network of the present invention substantially meets these needs and others. In one embodiment, a method for configuring an entertainment network begins by polling, by a master component of the entertainment network, slave components via a communication channel to identify active slave components of the entertainment network. The method continues by providing, by each of the active slave components, a profile response to the master component via the communication channel in response to the polling. The method continues by determining, by the master component, bandwidth requirements and configuration options of the entertainment network based on the profile responses of the active slave components and a profile of the master component. The method continues by, based on the bandwidth requirements and the configuration options of the entertainment network, establishing, by the master component, at least one of: a virtual connection between the master component and at least one of the active slave components and a virtual connection between a first one of the active slave components and a second one of the active slave components.

### BRIEF DESCRIPTION OF THE SEVERAL VIEWS OF THE DRAWINGS

Figure 1 is a schematic block diagram of a wireless entertainment network in accordance with the present invention;
Figure 2 is a schematic block diagram of a wired entertainment network in accordance with the present invention;
Figure 3 is a schematic block diagram of a wired and wireless entertainment network in accordance with the present invention;
Figure 4 is a diagram of an example profile table in accordance with the present invention;
Figure 5 is a diagram of example virtual connections within a wireless entertainment network in accordance with the present invention;
Figure 6 is a diagram of an example of a virtual connection map in accordance with the present invention;
Figure 7 is an example of communications within an entertainment network in accordance with the present invention; and
Figure 8 is a schematic block diagram of another entertainment network in accordance with the present invention.

### DETAILED DESCRIPTION OF THE INVENTION

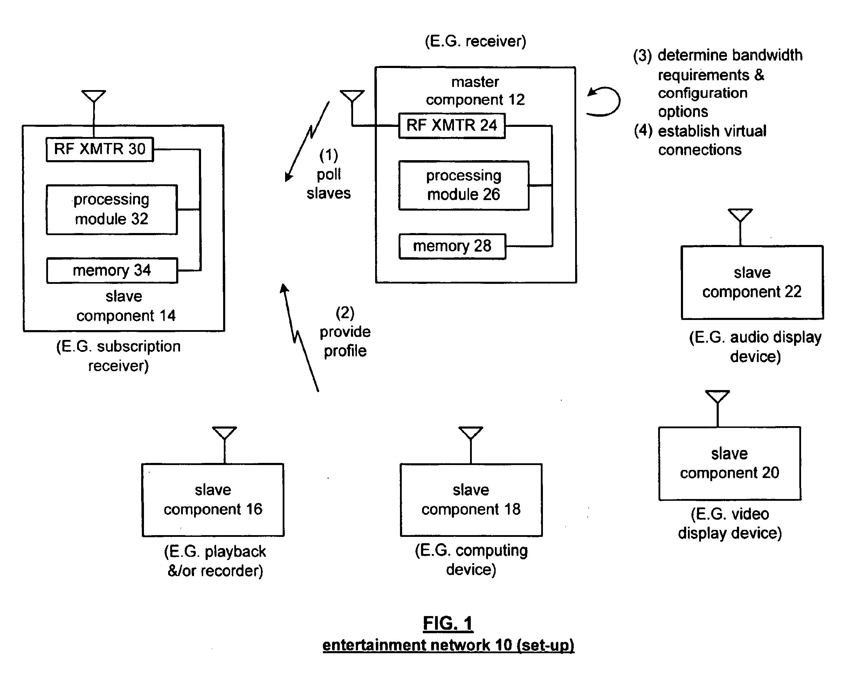

Figure 1 is a schematic block diagram of a wireless entertainment network 10 during setup. The entertainment network 10 includes a master component 12 and a plurality of slave components 14-22. The master component 12 includes a radio frequency (RF) transmitter (XMTR) 24, a processing module 26, and memory 28. Slave component 14, which is representative of the other slave components 16-22, includes a radio frequency transmitter 30, processing module 32, and memory 34. The RF transmitters 24 and 30 may be in accordance with one or more wireless communication standards. For example, the RF transmitters 24 and 30 may be constructed in accordance with one or more versions of the Bluetooth standard, one or more versions of IEEE 802.11, et cetera.

The processing modules 26 and 32 may each be individual processing devices and/or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 28 and 34 may be a single memory device or a plurality of memory devices. Such a memory device may be a read-only memory, random access memory, volatile memory, non-volatile memory, static memory, dynamic memory, flash memory, cache memory, and/or any device that stores digital information. Note that when the processing module 26 or 32 implements one or more of its functions via a state machine, analog circuitry, digital circuitry, and/or logic circuitry, the memory storing the corresponding operational instructions may be embedded within, or external to, the circuitry comprising the state machine, analog circuitry, digital circuitry, and/or logic circuitry. The memory 28 and/or 34 stores, and the processing module 26 and/or 32 executes, operational instructions corresponding to at least some of the functions illustrated in Figures 1 - 8.

To facilitate the setup of the wireless entertainment network 10 one or more of the components is designated as a master component. In this example, component 12 is designated as the master. For example, a system receiver may be designated as a master component, while a subscription receiver (e.g., cable set-top box, satellite receiver, broadcast receiver, playback and/or recorder device), CD player, DVD player, VCR, video disk, computing device (e.g., personal computer, laptop, personal digital assistant), video display device (e.g., Cathode ray tube (CRT), LCD monitor, TV monitor, video projector), and audio display device (e.g., speakers, headphones) may be chosen as slave components. If more than one component is selected as the master component, the master components would distribute the master functionality.

The setup of a wireless entertainment network 10 begins when the master component 12 polls the slave components via a wireless channel to identify the active slave components within the network. For instance, slave component 14 may be off such that it is not actively within the network. Note that the polling may be done in accordance with a wireless communication standard, e.g., one or more versions of Bluetooth. Further, the polling may be done by obtaining a system identification code for each of the slave components and addressing the slave components by the system identification code. The user of the system may assign the system identification codes via a user input of the entertainment network or the components may establish individual system identification codes via an auto-negotiation.

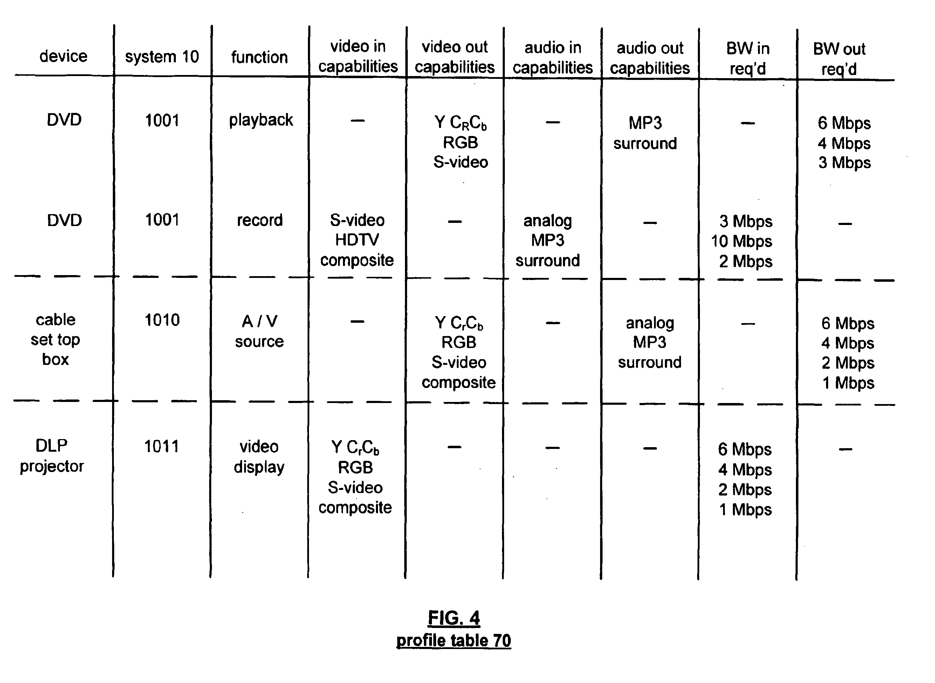

Upon receiving the poll request, each of the active slave components provides a profile response to the master component via the wireless communication channel. In general, the profile includes the device type, video input/output capabilities, audio input/output capabilities, functions, and per-function capabilities. The profile will be described in greater detail with the example of Figure 4.

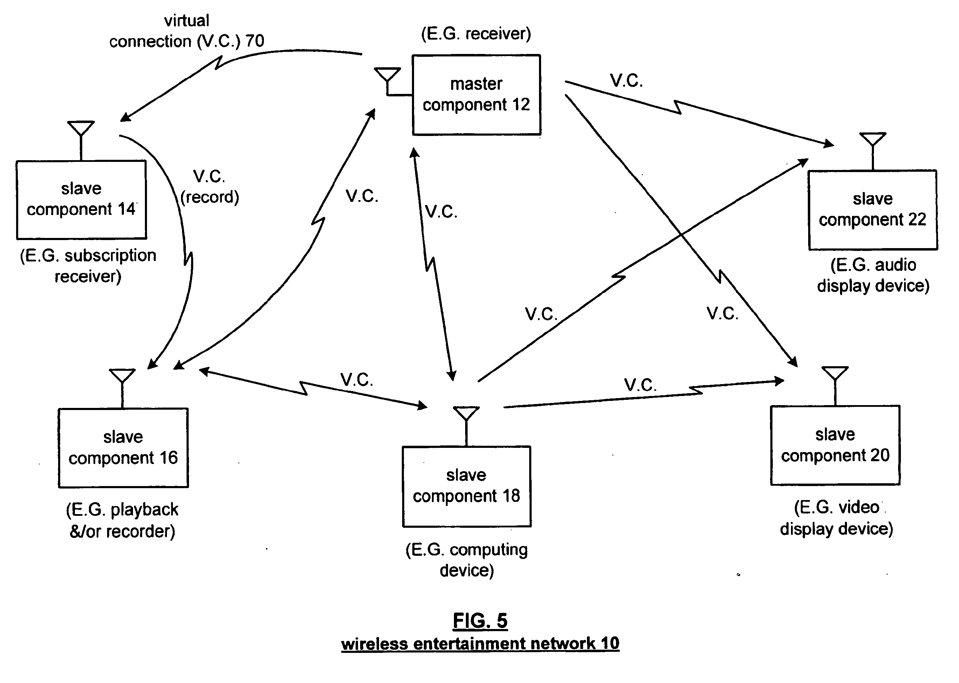

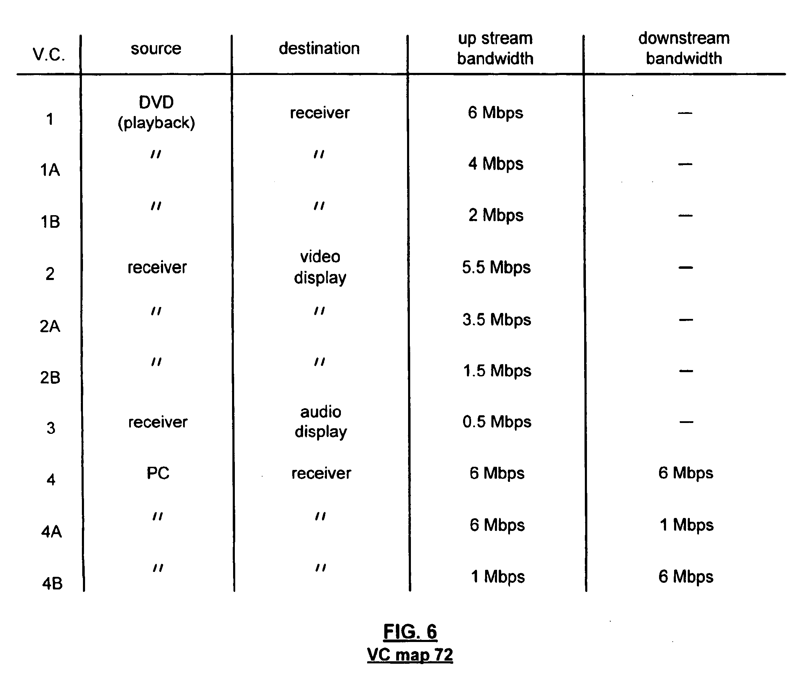

Upon receiving the profile responses from the active slaves, the master component 12 determines bandwidth requirements and configuration options for each of the slave devices. For example, slave component 16 may be a DVD player, which has composite, S-video and YCrCb video inputs and outputs. Each one of these video inputs and outputs may provide a different configuration option as well as having different bandwidth requirements. The DVD player, for example, may have connectivity to the master component 12, which may be the system receiver, to a computing device, and/or to the audio and video display devices. A determination of the bandwidth and configuration options will be described in greater detail with the examples of Figures 5 and 6.

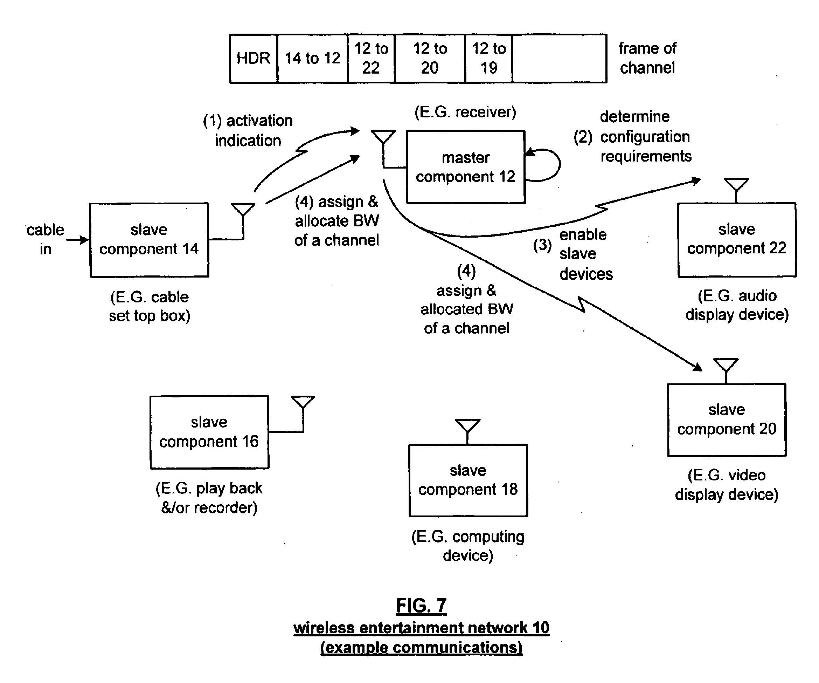

Having determined the bandwidth requirements and configuration options, the master component establishes virtual connections in accordance with the configuration options and corresponding bandwidth requirements. The virtual connections are based on possible desired communications at the appropriate bandwidths from one component within network 10 to another. As such, the virtual connections may be between the slave components, from a slave component to a master component and/or from a single component to multiple components. The virtual connections will be described in greater detail with the examples of Figures 5 and 6. As one of ordinary skill in the art will appreciate, the setup of the entertainment network 10 includes establishing a virtual connection map that indicates possible wireless connections between the components 12-22 of the network. The particular connections made will depend on user inputs as to how the network 10 will be utilized, which will be described in greater detail with reference to Figure 7. As one of ordinary skill in the art will further appreciate, the wireless entertainment network 10 may use one or more wireless communication channels of one or more wireless standards. For example, one or more channels of the Bluetooth standard may be utilized, or versions thereof, and/or one or more channels of the IEEE 802.11 standards, or versions thereof, may be used.

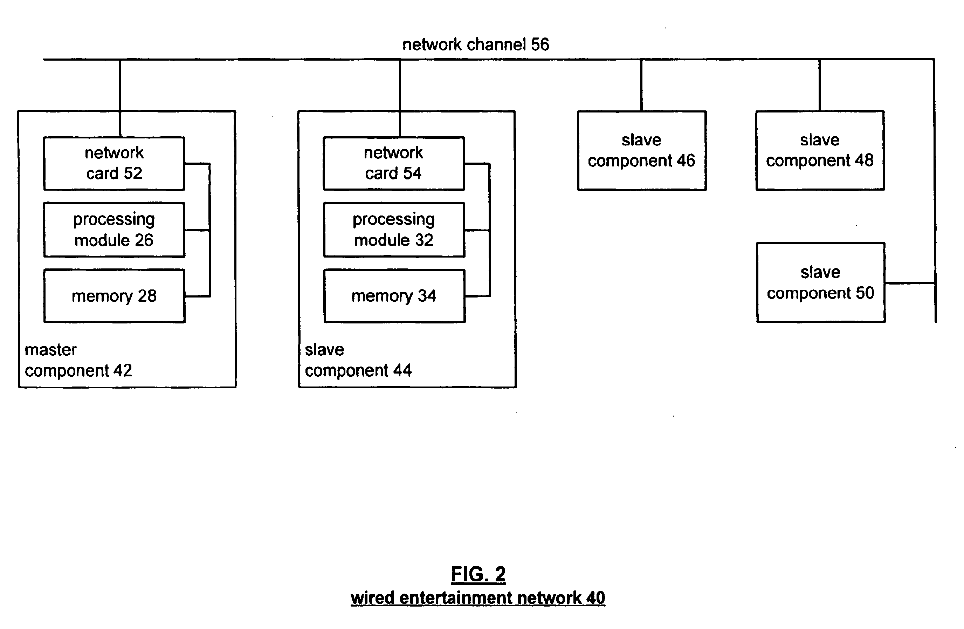

Figure 2 is a schematic block diagram of a wired entertainment network 40 that includes a master component 42 and slave components 44-50. The master component 42 includes a network card 52, processing module 26 and memory 28. The slave component 44, which is representative of the other slave components 46-50, includes a network card 54, processing module 32 and memory 34.

The network cards 52 and 54 provide the components 42-50 with connectivity to a network channel 56. The network channel 56 may be an Ethernet connection, fire wire connection, and/or a standardized wire network protocol channel. The network cards 52 and 54 will function in accordance with the particular wired standard supported by the network channel 56.

The master component 42 establishes virtual connections between itself and the slave components 44-50 as previously described with reference to Figure 1. In this embodiment, the communication path is via the network channel 56 as opposed to a wireless communication channel of Figure 1. The establishment of the virtual channels and functionality of the entertainment network 40 will be described in greater detail with reference to Figures 4-7.

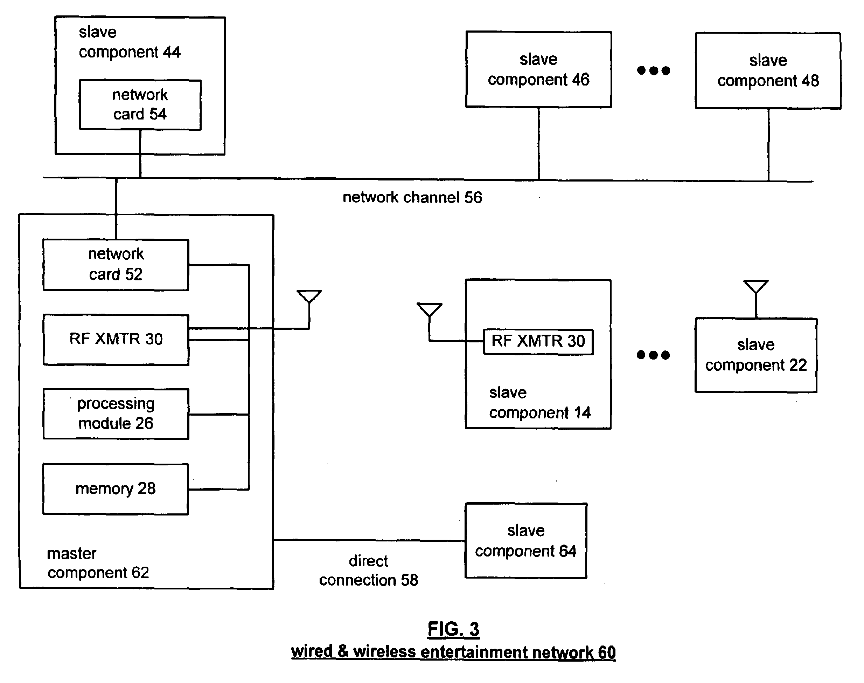

Figure 3 is a schematic block diagram of a wired and wireless entertainment network 60. In this embodiment, the entertainment network 60 includes master component 62, wired slave components 44-48, wireless slave components 14-22 and a direct connect slave component 64. The master component 62 includes the network card 52, the RF transmitter 30, the processing module 26, and the memory 28. The wired slave components 44-48 each include a network card 54 and are coupled to a network channel 56. Each of the wireless slave components 14-22 includes a radio frequency transmitter 30.

The setup of this network entertainment 60 includes a direct connection 58 between slave component 64 and master component 62. Virtual connections via the wired communication channel 56 may be established as previously described with reference to Figures 1 and 2. The virtual connections via the wireless communication channel, or channels, may be established as previously described with reference to Figure 1.

As one of ordinary skill in the art will appreciate, by providing wired and/or wireless network connectivity between the components of an entertainment system, the entertainment system may be readily configured and re-configured without the hassles of rewiring direct connections. For example, if the composite video output of a DVD player is used and the user desires to change that to an S-video output, a change in the selected virtual connection from composite video-out to S-video out is made via the master component and the system is correspondingly reconfigured.

Figure 4 is an example of a profile table 70. The table includes a plurality of fields, for example, device type, system identification code (ID), function, video-in capabilities, video-out capabilities, audio-in capabilities, audio-out capabilities, bandwidth input requirements and bandwidth output requirements. In this example, a DVD player is assigned system ID 1001 and has two functions; playback and record. In the playback mode, the DVD player has only output requirements. For example, the video output capabilities may be S-video, RGB, and/or YCRCB. The audio-output capabilities may be MP3 and/or surround sound. Each of these output configurations has a different bandwidth requirement. For example, the playback of a DVD may require 6 megabits-per-second, 4 megabits-per-second, 3 megabits-per-second, et cetera. From this information, the master component may setup one or more virtual connections for each possible video-output and audio-output configuration. As such, based on this example, the DVD player in playback mode may have 6 virtual output connections to each of one or more components in the system.

In a record mode, the DVD player has only input requirements. As shown, the video-input capabilities may include S-video, HDTV, composite video and the audio-inputs may include analog, MP3 and/or surround sound. Each of these different input requirements has different bandwidth requirements. For example, 3 megabits-per-second, 10 megabits-per-second, 2 megabits-per-second, et cetera. Based on this information, the master component may establish up to 9 virtual input connections for the DVD player in the record mode from each of the devices within the network that could provide inputs to the DVD player for recording.

As is further shown in the profile table 70, a cable set-top box may be assigned system ID 1010 and have an audio/video source function. While, with respect to the network, the cable set-top box does not have an audio or video input capabilities, such connectivity comes directly from a cable connection, it does have video and audio output capabilities. For example, the set-top box may have video-output selections of composite video, S-video, RGB video, and/or YCrCb video. As is also shown, the audio-output capabilities may be analog, MP3 and/or surround sound. Based on the various combinations of the video-outputs and audio-outputs, the bandwidth output requirements may change. For example, the bandwidth requirements may range from 1 megabit-per-second to 6 megabits-per-second. Based on this information, the master component may setup multiple virtual output connections from the set-top box to one or more of the components of the entertainment network that can either store and/or display the outputs from the set-top box.

The profile table 70 also includes a DLP projector device, which is assigned system ID 1011 and has the function of video display. The DLP projector only includes video-input capabilities of, for example, composite video, S-video, RGB video, and/or YCrCb video. Each of these types of video-inputs has a different bandwidth requirement. For example, the bandwidth may range from 1 megabit-per-second to 6 or more megabits-per-second.

As one of ordinary skill in the art will appreciate, the profile table 70 may be stored within memory 28 of the master component and/or stored in the memory of one or more of the slave components. As one of ordinary skill in the art will further appreciate, other devices may be included in the profile table and the video-input and output capabilities, audio-input and output capabilities and bandwidth input and output requirements may vary from the examples shown in Figure 4.

Figure 5 is an example of the master component 12 establishing virtual connections within the wireless entertainment network 10. The same concepts of establishing virtual connections are applicable to the systems of Figures 2 and 3. In this example, based on the profile table 70, the master component 12 establishes various virtual connections between the slave components and itself and between the slave components.

For example, if slave component 14 is a subscription receiver, a virtual connection 70 may be established between slave component 14 and master component 12, and another virtual connection for recording the data provided by the slave component 14 may be established with slave component 16. Other virtual connections may be established as shown. Further, multiple virtual connections may be established between the components based on ,the different audio and/or video capabilities of the components in the network. For example, if slave component 14 includes S-video and composite video outputs only, and slave component 16 includes composite video inputs, S-video inputs, RGB video inputs, YCRCB video inputs, the master component would establish 2 virtual connections between slave components 14 and 16; one for composite video and another for S-video.

As the master establishes the virtual connection, it generates a virtual connection map 72 as shown in Figure 6. In the example of Figure 6, the master generates numbered virtual connections that provide virtual connectivity between a source (e.g., output device) and destination (e.g., input device) and further indicate the desired upstream and downstream bandwidths. For reference, an upstream communication is from the source to the destination and a downstream communication is from the destination to the source.

In this example, three virtual connections are established between the DVD player, in the playback mode, and the system receiver. Each of the virtual connections has a different upstream bandwidth requirement based on the corresponding video inputs and outputs of the DVD player and receiver.

The map also includes multiple virtual connections between the system receiver and the video display device and corresponding differing upstream bandwidth requirements. In this example, a single virtual connection is made between the receiver and the audio display with a single upstream bandwidth requirement.

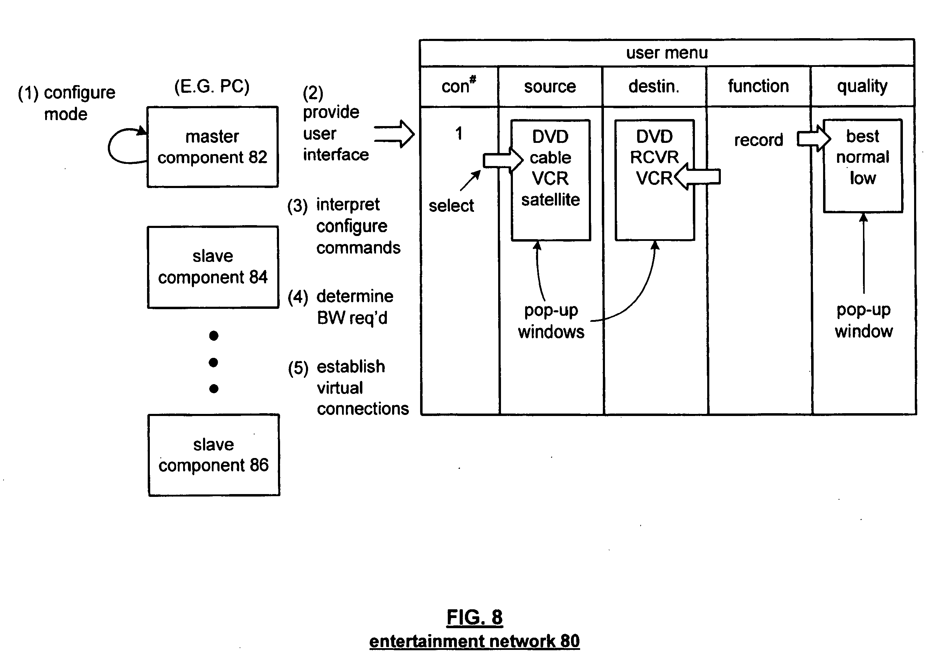

The example of the virtual connection map 72 further shows multiple virtual connections between a personal computer and the system receiver each having different upstream and downstream bandwidth requirements. As one of ordinary skill in the art will appreciate, the virtual connection map 72 may include up to all possible connections between the components within the network 10 and may be adjusted as components are activated or deactivated, and/or as components are added or removed from the network. Alternatively, the virtual connection map 72 may include the user defined virtual connections as will be described in greater detail with reference to Figure 8.

Figure 7 is a schematic block diagram of example communications within the wireless entertainment network 10. While Figure 7 is directed towards the wireless entertainment network 10, the example communications described herein are applicable to the communications that occur within the networks of Figures 2 and 3.

In this example, the user has selected to view a channel from the cable set-top box. When the cable set-top box is activated, it sends an indication of its activation to the master component 12 via the wireless communication channel. Upon receiving the activation indication, the master component 12 determines the configuration requirements for the particular slave component selected. This may be done by interpreting the activation signal which includes the particular types of connectivity required and/or utilizing a default setting from the virtual map table. Note, that if the desired bandwidth for the communications is not available, the master may reduce the bandwidth requirements thus, lowering the quality of the audio and/or video but providing the desired service.

Having determined the configuration requirements, the master component then enables the corresponding slave components via the wireless communication channel. In this example, the master component enables the audio display device and the video display device. The master component 12 then assigns one or more wireless communication channels to support the selective cable set-top box and allocates the appropriate bandwidth of the one or more channels. Once the channel and bandwidth have been allocated, the slave component 14 provides audio and video outputs to the master component via a wireless communication channel. The master component 12 relays the audio and video to the audio and video display devices 20 and 22.

Figure 7 further illustrates a frame of a wireless channel in accordance with the example of Figure 7. As shown, the frame includes a header portion (HDR) and a data portion. The data portion bandwidth is divided into multiple sections. The 1^{st} section 14-12 indicates the bandwidth of a particular frame on a channel as being allocation for data to be conveyed from slave cable set top-box 14 to the master system receiver 12. The next section is indicated by 12-22, which is the bandwidth allocated for the master component 12 to provide audio signals to slave component 22. The next section of the data portion is labeled as 12-20, which indicates the bandwidth allocated per-frame-per-channel to the master component 12 providing video signals to slave component 20. The frame also includes a bandwidth allocation for data being relayed from the master component 12 to slave component 14. This section is labeled as 12-14.

This wireless configuration will remain as long as the slave component 14 is activated by the user for displaying audio and video. If the user changes the particular components for example, desires to watch a DVD via slave component 16, the process would first deactivate the channel and bandwidth allocations to the current setup and begin the process of reassigning the channel and bandwidth to the newly selective slave component 16.

Figure 8 is a schematic block diagram of entertainment network 80 that may be a wireless network, wired network and/or combination thereof. In this illustration, the entertainment network 80 includes a master component 82 and a plurality of slave components 84-86. The master component 82 may be a similar component as master component 12, 42 and/or 62 while the slave components may be similar to slave component 14, 44 and/or 64. In this example, the entertainment network 80 is setup by having the master component 82, which may be a personal computer, place the network 80 in a configuration mode. In the configuration mode, which may be activated via a user input via the personal computer and/or other device within the network 80, provides a user interface on the master component 82 or on a display device within the network.

The user interface may be as shown in the accompanying example of a user menu. The user menu includes fields for connection number, source selection, destination selection function of the particular device and desired quality for the particular connection. In this example, a 1^{st} connection may be established between a source and a destination each of which may be selected via popup windows. In this example, the sources may be selected from a DVD player, cable set-top box, VCR, or satellite receiver. The destinations may be a DVD player, system receiver and/or VCR. In this example, the cable set-top box is selected as the source and the VCR is selected as the destination. The user may then select the particular function of the source and destination, or the function may be automatically determined based on the source and destination. The user may then decide the audio and/or video quality desired. In this example, a popup window is provided to indicate best quality, normal quality or low quality. In this example, the user has selected the best quality. The user then would go from component-to-component to establish as many virtual connections within the network as desired.

The master component interprets the configuration commands as selected by the user via the user menu to determine bandwidth requirements and configuration options. Having determined the bandwidth requirements, which is based on the source, destination function and quality selected, the master component establishes virtual connections. The virtual connections may be established via wireless communication channels and/or wired communication channels. The master component stores the virtual connections in a virtual connection map as previously described with reference to Figure 6. Having generated the virtual connection map, the entertainment network 80 may be utilized as previously described with reference to Figure 7.

As one of ordinary skill in the art will appreciate, the term "substantially" or "approximately", as may be used herein, provides an industry-accepted tolerance to its corresponding term and/or relativity between items. Such an industry-accepted tolerance ranges from less than one percent to twenty percent and corresponds to, but is not limited to, component values, integrated circuit process variations, temperature variations, rise and fall times, and/or thermal noise. Such relativity between items ranges from a difference of a few percent to magnitude differences. As one of ordinary skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled". As one of ordinary skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The preceding discussion has presented a method and apparatus for configuring an entertainment system. By providing network type connectivity, the entertainment system may be readily reconfigured by removing components, adding components and/or changing desired video and/or audio inputs and outputs. As one of ordinary skill in the art will appreciate, other embodiments may be derived from the teaching of the present invention without deviating from the scope of the claims.

## Claims

1. A method for configuring an entertainment network (60), the method comprises:
polling, by a master component (62) of the entertainment network (60), slave components (14, 22, 44, 46, 48, 64) via a communication channel to identify active slave components of the entertainment network (60);
providing, by each of the active slave components, a profile response to the master component (62) via the communication channel in response to the polling;
determining, by the master component (62), bandwidth requirements and configuration options of the entertainment network (60) based on the profile responses of the active slave components and a profile of the master component (62); and
based on the bandwidth requirements and the configuration options of the entertainment network (60), establishing, by the master component (62), at least one of:
a virtual connection between the master component (62) and at least one of the active slave components; and
a virtual connection between a first one of the active slave components and a second one of the active slave components.

2. The method of claim 1, wherein the polling of the slave components (14, 22, 44, 46, 48, 64) comprises:
polling the slave components (14, 22, 44, 46, 48, 64) based on an individual system identification code of each of the slave components (14, 22, 44, 46, 48, 64).

3. The method of claim 2 further comprises:
obtaining a system identification code from a user input of the entertainment network (60); and
establishing the individual system identification codes of each of the slave components (14, 22, 44, 46, 48, 64) by at least one of:
auto-negotiating for the individual system identification codes by the slave components (14, 22, 44, 46, 48, 64); and
obtaining the individual system identification codes of the slave components (14, 22, 44, 46, 48, 64) from the user input.

4. The method of claim 1, wherein the profile response comprises at least one of:
device type;
video input/output capabilities;
audio input/output capabilities;
functions; and
per function capabilities.

5. The method of claim 1, wherein the method further comprises:
generating, by the master component (62), a virtual connection map that includes each of the virtual connections; and
providing the virtual connection map to the active slave components via the communication channel.

6. An entertainment network (60) comprises:
a master component (62) that includes a master processing module (26) and master memory (28); and
a plurality of slave components (14, 22, 44, 46, 48, 64), wherein each of the plurality of slave components (14, 22, 44, 46, 48, 64) includes a slave processing module (32) and slave memory (34), wherein the master memory (28) and the slave memory (34) store operational instructions that cause the master processing module (26) and the slave processing module (32) to, respectively, enable the master component (62) and the plurality of slave components (14, 22, 44, 46, 48, 64) to:
poll, by the master component (62), the plurality of slave components (14, 22, 44, 46, 48, 64) via a communication channel to identify active slave components;
provide, by each of the active slave components, a profile response to the master component (62) via the communication channel in response to the polling;
determine, by the master component (62), bandwidth requirements and configuration options of the entertainment network (60) based on the profile responses of the active slave components and a profile of the master component (62); and
based on the bandwidth requirements and the configuration options of the entertainment network (60), establish, by the master component (62), at least one of:
a virtual connection between the master component (62) and at least one of the active slave components; and
a virtual connection between a first one of the active slave components and a second one of the active slave components.

7. The entertainment network (60) of claim 6, wherein the master memory (28) further stores operational instructions that cause the master processing module (26) to enable the master component (62) to poll of the plurality of slave components:
polling the plurality of slave components (14, 22, 44, 46, 48, 64) based on an individual system identification code of each of the plurality of slave components (14, 22, 44, 46, 48, 64).

8. The entertainment network (60) of claim 7, wherein at least one of the master memory (28) and the slave memory (34) further store operational instructions that cause the master processing module (26) and slave processing module (32) to enable the master component (62) and each of the plurality of slave components (14, 22, 44, 46, 48, 64), respectively, to:
obtain a system identification code from a user input of the entertainment network (60); and
establish the individual system identification codes of each of the plurality slave components (14, 22, 44, 46, 48, 64) by at least one of:
auto-negotiating for the individual system identification codes by the slave components (14, 22, 44, 46, 48, 64); and
obtaining the individual system identification codes of the slave components (14, 22, 44, 46, 48, 64) from the user input.

9. The entertainment network (60) of claim 8, wherein the master memory (28) further stores operational instructions that cause the master processing module (26) to enable the master component (62) to:
generate a virtual connection map that includes each of the virtual connections; and
provide the virtual connection map to the active slave components via the communication channel.

10. The entertainment network (60) of claim 6, wherein the communication channel includes at least one of a wired communication channel and a wireless communication channel; and
each of the virtual connections includes at least one of the wired communication channel and the wireless communication channel.

## Patentansprüche

1. Verfahren zur Konfigurierung eines Unterhaltungsnetzwerks (60), wobei das Verfahren Folgendes umfasst:
Abfragen durch eine Master-Komponente (62) des Unterhaltungsnetzwerks (60) von Slave-Komponenten (14, 22, 44, 46, 48, 64) über einen Kommunikationskanal, um aktive Slave-Komponenten des Unterhaltungsnetzwerks (60) zu identifizieren;
Bereitstellen durch jede der aktiven Slave-Komponenten einer Profilantwort für die Master-Komponente (62) über den Kommunikationskanal in Reaktion auf das Abfragen;
Bestimmen durch die Master-Komponente (62) von Bandbreitenanforderungen und Konfigurationsoptionen des Unterhaltungsnetzwerks (60) auf der Grundlage der Profilantworten der aktiven Slave-Komponenten und eines Profils der Master-Komponente (62); und
auf der Grundlage der Bandbreitenanforderungen und der Konfigurationsoptionen des Unterhaltungsnetzwerks (60) Herstellen durch die Master-Komponente (62) von wenigstens einer von:
einer virtuellen Verbindung zwischen der Master-Komponente (62) und wenigstens einer der aktiven Slave-Komponenten; und
einer virtuellen Verbindung zwischen einer ersten der aktiven Slave-Komponenten und einer zweiten der aktiven Slave-Komponenten.

2. Verfahren nach Anspruch 1, wobei das Abfragen der Slave-Komponenten (14, 22, 44, 46, 48, 64) Folgendes umfasst:
Abfragen der Slave-Komponenten (14, 22, 44, 46, 48, 64) auf der Grundlage eines individuellen Systemidentifikationscodes jeder der Slave-Komponenten (14, 22, 44, 46, 48, 64).

3. Verfahren nach Anspruch 2, das des Weiteren Folgendes umfasst:
Erhalten eines Systemidentifikationscodes aus einer Benutzereingabe des Unterhaltungsnetzwerks (60); und
Erstellen der individuellen Systemidentifikationscodes jeder der Slave-Komponenten (14, 22, 44, 46, 48, 64) durch wenigstens einen der folgenden Schritte:
Autonegotiation für die individuellen Systemidentifikationscodes durch die Slave-Komponenten (14, 22, 44, 46, 48, 64); und
Erhalten der individuellen Systemidentifikationscodes der Slave-Komponenten (14, 22, 44, 46, 48, 64) aus der Benutzereingabe.

4. Verfahren nach Anspruch 1, wobei die Profilantwort wenigstens eine(n) der Folgenden umfasst:
Gerätetyp;
Videoeingabe-/-ausgabefähigkeiten;
Audioeingabe-/-ausgabefähigkeiten;
Funktionen; und
Fähigkeiten pro Funktion.

5. Verfahren nach Anspruch 1, wobei das Verfahren des Weiteren Folgendes umfasst:
Erzeugen durch die Master-Komponente (62) eines virtuellen Verbindungsplans, der jede der virtuellen Verbindungen enthält; und
Liefern des virtuellen Verbindungsplans zu den aktiven Slave-Komponenten über den Kommunikationskanal.

6. Unterhaltungsnetzwerk (60) mit:
einer Master-Komponente (62), die ein Master-Verarbeitungsmodul (26) und einen Master-Speicher (28) umfasst; und
einer Vielzahl von Slave-Komponenten (14, 22, 44, 46, 48, 64), wobei jede der Vielzahl von Slave-Komponenten (14, 22, 44, 46, 48, 64) ein Slave-Verarbeitungsmodul (32) und einen Slave-Speicher (34) umfasst, wobei der Master-Speicher (28) und der Slave-Speicher (34) Betriebsanweisungen speichern, die bewirken, dass das Master-Verarbeitungsmodul (26) und das Slave-Verarbeitungsmodul (32) jeweils die Master-Komponente (62) und die Vielzahl von Slave-Komponenten (14, 22, 44, 46, 48, 64) in die Lage versetzen:
durch die Master-Komponente (62) die Vielzahl von Slave-Komponenten (14, 22, 44, 46, 48, 64) über einen Kommunikationskanal abzufragen, um aktive Slave-Komponenten zu identifizieren;
durch jede der aktiven Slave-Komponenten eine Profilantwort für die Master-Komponente (62) über den Kommunikationskanal in Reaktion auf das Abfragen bereitzustellen;
durch die Master-Komponente (62) Bandbreitenanforderungen und Konfigurationsoptionen des Unterhaltungsnetzwerks (60) auf der Grundlage der Profilantworten der aktiven Slave-Komponenten und eines Profils der Master-Komponente (62) zu bestimmen; und
auf der Grundlage der Bandbreitenanforderungen und der Konfigurationsoptionen des Unterhaltungsnetzwerks (60) durch die Master-Komponente (62) wenigstens eine der Folgenden herzustellen:
eine virtuelle Verbindung zwischen der Master-Komponente (62) und wenigstens einer der aktiven Slave-Komponenten; und
eine virtuelle Verbindung zwischen einer ersten der aktiven Slave-Komponenten und einer zweiten der aktiven Slave-Komponenten.

7. Unterhaltungsnetzwerk (60) nach Anspruch 6, wobei der Master-Speicher (28) des Weiteren Betriebsanweisungen speichert, die bewirken, dass das Master-Verarbeitungsmodul (26) die Master-Komponente (62) in die Lage versetzt, die Vielzahl von Slave-Komponenten abzufragen:
Abfragen der Vielzahl von Slave-Komponenten (14, 22, 44, 46, 48, 64) auf der Grundlage eines individuellen Systemidentifikationscodes jeder der Vielzahl von Slave-Komponenten (14, 22, 44, 46, 48, 64).

8. Unterhaltungsnetzwerk (60) nach Anspruch 7, wobei wenigstens einer des Master-Speichers (28) und des Slave-Speichers (34) des Weiteren Betriebsanweisungen speichert, die bewirken, dass das Master-Verarbeitungsmodul (26) und das Slave-Verarbeitungsmodul (32) die Master-Komponente (62) und jede der Vielzahl von Slave-Komponenten (14, 22, 44, 46, 48, 64) jeweils in die Lage versetzt:
einen Systemidentifikationscode aus einer Benutzereingabe des Unterhaltungsnetzwerks (60) zu erhalten; und
die individuellen Systemidentifikationscodes jeder der Vielzahl von Slave-Komponenten (14, 22, 44, 46, 48, 64) durch wenigstens einen der folgenden Schritte zu erstellen:
Autonegotiation für die individuellen Systemidentifikationscodes durch die Slave-Komponenten (14, 22, 44, 46, 48, 64); und
Erhalten der individuellen Systemidentifikationscodes der Slave-Komponenten (14, 22, 44, 46, 48, 64) aus der Benutzereingabe.

9. Unterhaltungsnetzwerk (60) nach Anspruch 8, wobei der Master-Speicher (28) des Weiteren Betriebsanweisungen speichert, die bewirken, dass das Master-Verarbeitungsmodul (26) die Master-Komponente (62) in die Lage versetzt:
einen virtuellen Verbindungsplan zu erzeugen, der jede der virtuellen Verbindungen einschließt; und
den virtuellen Verbindungsplan zu den aktiven Slave-Komponenten über den Kommunikationskanal zu liefern.

10. Unterhaltungsnetzwerk (60) nach Anspruch 6, wobei der Kommunikationskanal wenigstens einen von einem drahtgebundenen Kommunikationskanal und einem drahtlosen Kommunikationskanal umfasst; und
jede der virtuellen Verbindungen wenigstens einen von dem drahtgebundenen Kommunikationskanal und dem drahtlosen Kommunikationskanal umfasst.

## Revendications

1. Procédé de configuration d'un réseau de divertissement (60), le procédé comprenant :
la scrutation, par un composant maître (62) du réseau de divertissement (60), de composants esclaves (14, 22, 44, 46, 48, 64) par l'intermédiaire d'un canal de communication de manière à identifier les composants esclaves actifs du réseau de divertissement (60) ;
la fourniture, par chacun des composants esclaves actifs, d'une réponse de profil au composant maître (62) par l'intermédiaire du canal de communication en réponse à la scrutation ;
la détermination, par le composant maître (62), des largeurs de bandes nécessaires et des options de configuration du réseau de divertissement (60) sur la base des réponses de profil des composants esclaves actifs et d'un profil du composant maître (62) ; et
sur la base des largeurs de bandes nécessaires et des options de configuration du réseau de divertissement (60), l'établissement, par le composant maître (62), d'au moins l'une d'une :
connexion virtuelle entre le composant maître (62) et au moins l'un des composants esclaves actifs ; et
connexion virtuelle entre un premier des composants esclaves actifs et un deuxième des composants esclaves actifs.

2. Procédé selon la revendication 1, dans lequel la scrutation des composants esclaves (14, 22, 44, 46, 48, 64) comprend :
la scrutation des composants esclaves (14, 22, 44, 46, 48, 64) sur la base d'un code d'identification système individuel de chacun des composants esclaves (14, 22, 44, 46, 48, 64).

3. Procédé selon la revendication 2 comprenant en outre :
l'obtention d'un code d'identification système à partir d'une entrée d'utilisateur du réseau de divertissement (60) ; et
l'établissement des codes d'identification système individuels de chacun des composants esclaves (14, 22, 44, 46, 48, 64) par au moins l'une d'une :
auto-négociation des codes d'identification système individuels par les composants esclaves (14, 22, 44, 46, 48, 64) ; et
obtention des codes d'identification système individuels des composants esclaves (14, 22, 44, 46, 48, 64) à partir de l'entrée utilisateur.

4. Procédé selon la revendication 1, dans lequel la réponse de profil comprend au moins un élément parmi :
un type de dispositif ;
des possibilités d'entrée / sortie vidéo ;
des possibilités d'entrée / sortie audio ;
des fonctions ; et
des possibilités par fonction.

5. Procédé selon la revendication 1, le procédé comprenant en outre :
la génération, par le composant maître (62), d'une carte de connexions virtuelles qui inclut chacune des connexions virtuelles ; et
la fourniture de la carte de connexions virtuelles aux composants esclaves actifs par l'intermédiaire du canal de communication.

6. Réseau de divertissement (60) comprenant :
un composant maître (62) qui inclut un module de traitement maître (26) et une mémoire maîtresse (28) ; et
une pluralité de composants esclaves (14, 22, 44, 46, 48, 64), dans laquelle chacun de la pluralité de composants esclaves (14, 22, 44, 46, 48, 64) inclut un module de traitement esclave (32) et une mémoire esclave (34), où la mémoire maîtresse (28) et la mémoire esclave (34) stockent des instructions opérationnelles qui font que le module de traitement maître (26) et le module de traitement esclave (32), respectivement, permettent au composant maître (62) et à la pluralité de composants esclaves (14, 22, 44, 46, 48, 64) de :
scruter, par le composant maître (62), la pluralité de composants esclaves (14, 22, 44, 46, 48, 64) par l'intermédiaire d'un canal de communication de manière à identifier les composants esclaves actifs ;
fournir, par chacun des composants esclaves actifs, une réponse de profil au composant maître (62) par l'intermédiaire du canal de communication en réponse à la scrutation ;
déterminer, par le composant maître (62), les largeurs de bandes nécessaires et les options de configuration du réseau de divertissement (60) sur la base des réponses de profil des composants esclaves actifs et d'un profil du composant maître (62) ; et
sur la base des largeurs de bandes nécessaires et des options de configuration du réseau de divertissement (60), établir, par le composant maître (62), au moins l'une d'une :
connexion virtuelle entre le composant maître (62) et au moins l'un des composants esclaves actifs ; et
une connexion virtuelle entre un premier des composants esclaves actifs et un deuxième des composants esclaves actifs.

7. Réseau de divertissement (60) selon la revendication 6, dans lequel la mémoire maîtresse (28) stocke en outre des instructions opérationnelles qui font que le module de traitement maître (26) permet au composant maître (62) de scruter la pluralité de composants esclaves :
la scrutation de la pluralité de composants esclaves (14, 22, 44, 46, 48, 64) se faisant sur la base d'un code d'identification système individuel de chacun de la pluralité de composants esclaves (14, 22, 44, 46, 48, 64) .

8. Réseau de divertissement (60) selon la revendication 7, dans lequel au moins l'une de la mémoire maîtresse (28) et de la mémoire esclave (34) stocke en outre des instructions opérationnelles qui font que le module de traitement maître (26) et le module de traitement esclave (32), permettent au composant maître (62) et à chacun de la pluralité de composants esclaves (14, 22, 44, 46, 48, 64), respectivement :
d'obtenir un code d'identification système à partir d'une entrée d'utilisateur du réseau de divertissement (60) ; et
d'établir des codes d'identification système individuels de chacun de la pluralité des composants esclaves (14, 22, 44, 46, 48, 64) par au moins l'une d'une :
auto-négociation des codes d'identification système individuels par les composants esclaves (14, 22, 44, 46, 48, 64) ; et
obtention des codes d'identification système individuels des composants esclaves (14, 22, 44, 46, 48, 64) à partir de l'entrée utilisateur.

9. Réseau de divertissement (60) selon la revendication 8, dans lequel la mémoire maîtresse (28) stocke en outre des instructions opérationnelles qui font que le module de traitement maître (26) permet au composant maître (62) :
de générer une carte de connexions virtuelles qui inclut chacune des connexions virtuelles ; et
de fournir la carte de connexions virtuelles aux composants esclaves actifs par l'intermédiaire du canal de communication.

10. Réseau de divertissement (60) selon la revendication 6, dans lequel le canal de communication inclut au moins l'un d'un canal de communication câblé et d'un canal de communication sans fil ; et
chacune des connexions virtuelles inclut au moins l'un du canal de communication câblé et du canal de communication sans fil.
